# EUROPEAN PATENT APPLICATION

(11) **EP 1 445 849 A2**
(43) Date of publication of application: **11.08.2004**
(21) Application number: 03257935.1
(22) Date of filing: 16.12.2003
(51) Int. Cl.: H02K 7/102

(54) **Motor**

(30) Priority: 24.12.2002 CN 02157256
(71) Applicant: Positec Power Tools (Suzhou) Co., Ltd, Suzhou 215006 (CN)
(72) Inventor: Kening, Zou, Suzhou 215006 (CN); Zhao, Kong, Dushi Garden Suzhou 215021 (CN)
(74) Representative: Stuttard, Garry Philip

(57) **Abstract**

The present invention relates to an electric motor with a rotor braking device comprising a stator, a rotor, a shaft fixed to said rotor and a short-circuit ring fixed to an end of the rotor. A planar brake body rings the shaft and a friction body is provided between the brake body and a front end covering which is stable with respect to the stator. A spring is provided between the rotor and the brake body and biases the brake body against the friction body. An end portion of the brake body facing the short-circuit ring is provided with a recess which opens towards the short-circuit ring and comprises at least one beveled surface. The shaft is provided within the short-circuit ring. A pin extends in a radial direction on the shaft and lies in the recess. The planar brake body has a simple structure so it easily manufactured and assembled at reduced cost.

## Description

The present invention relates to a motor capable of braking automatically after power turn-off.

EP-A-360779 discloses an arrangement for braking an electric motor with a squirrel-cage rotor comprising a substantially pot-shaped brake body formed by deep drawing whose free edge faces towards the short-circuit ring of the squirrel-cage rotor and at least one beveled surface on each projection projects towards the short-circuit ring. The projections formed on the short-circuit ring of the squirrel-cage rotor each have a wedged surface which is aligned relative to the axis of the squirrel-cage rotor in the same oblique position as the beveled surface on the brake body. A brake lining is arranged between the brake body and a component fixed relative to the housing of the electric motor and a spring biasing the brake body against the brake lining is arranged between the brake body and the squirrel-cage rotor. As the brake body is a pot-shaped structure, it is very difficult and therefore costly to manufacture the projections on its bottom portion.

The present invention seeks to provide an easily manufactured braking arrangement for a squirrel-cage electric motor and in particular relates to a braking arrangement exploiting a brake body of elegantly simple structure.

Thus viewed from one aspect the present invention provides an electric motor comprising:
a stator;
a rotor;
a front end cover which is stable with respect to the stator;
a short-circuit ring fixed to an end of the rotor;
a shaft fixed to the rotor and extending through the short-circuit ring;
a brake body ringing the shaft;
a friction body between the brake body and the front end cover;
a spring between the rotor and the brake body with a tendency to bias the brake body against the friction body,
characterized in that the electric motor further comprises:
an elongate projection on the underside of the brake body, wherein the elongate projection is provided with a recess which is bounded by at least one beveled surface; and
a pin mounted radially on the shaft and extending through the recess.

The present invention relates to an electric motor capable of braking automatically after power turn-off comprising a stator, a rotor, a shaft fixed to said rotor and a short-circuit ring fixed to an end of the rotor. A brake body rings the shaft and may be seated in use on the end of the short-circuit ring. The elongate projection may extend substantially coaxially within the short circuit ring. A friction body is provided between the brake body and a front end covering which is stable with respect to the stator. A spring is provided between the rotor and the brake body and biases the brake body against the friction body. An end portion of the brake body facing the short-circuit ring is provided with a recess which opens towards the short-circuit ring and is bounded by at least one beveled surface. The shaft is provided within the short-circuit ring. A pin extends in a radial direction on the shaft and lies in the recess.

Preferably the electric motor further comprises a magnetic conducting ring between the rotor and the brake body surrounding the short-circuit ring. The magnetic conducting ring may be distant from the brake body.

Preferably the short-circuit ring is provided with at least one opening and the axis of the pin lies in the opening. Particularly preferably the short-circuit ring is provided with two diametrically opposed openings and the axis of the pin lies in the openings.

Preferably the brake body is a substantially planar member of any convenient shaped with a substantially central aperture for ringing the shaft. Typically the brake body is a circular planar member.

Preferably the elongate projection is a substantially cylindrical projection.

Preferably the recess is formed by two diametrically opposed notches in the end of the elongate (*eg* substantially cylindrical) projection.

The brake body advantageously has a simple structure so it easily manufactured and assembled at a reduced cost.

Viewed from a further aspect the present invention provides a brake body as hereinbefore defined.

Viewed from a yet further aspect the present invention provides an electric motor with rotor braking device comprising a stator, a rotor, a shaft fixedly connected to said rotor, a short-circuit ring fixedly connect to a end portion of said rotor, a brake body ring around said shaft, a friction body providing between said brake body and a front end covering which is stable with respect to said stator, a spring provided between said rotor and said brake body and which give said brake body a trend against said friction body, characterized in that: a end portion facing said short-circuit ring of said brake body is disposed with a recess which open towards said short-circuit ring and comprises at least one beveled surface, the shaft provided within the short-circuit ring, a pin extending in radial direction mount on the shaft and lies in the recess.

The invention will now be described in a non-limitative sense with reference to the accompanying Figures in which:
FIG. 1 shows a mainly sectional view of an embodiment of the present invention;
FIG. 2 shows a partly exploded view of the braking arrangement of the embodiment of the present invention;
FIG. 3 shows a perspective view of one side of the rotor of the embodiment of the present invention;
FIG. 4 shows a perspective view of the rotor of FIG. 3 with the spring assembled;
FIG. 5 shows a perspective view of the rotor of FIG. 4 with the brake body assembled;
FIG. 6 shows a front view of the rotor with the brake body assembled; and
FIG. 7 shows a perspective view of the brake body.

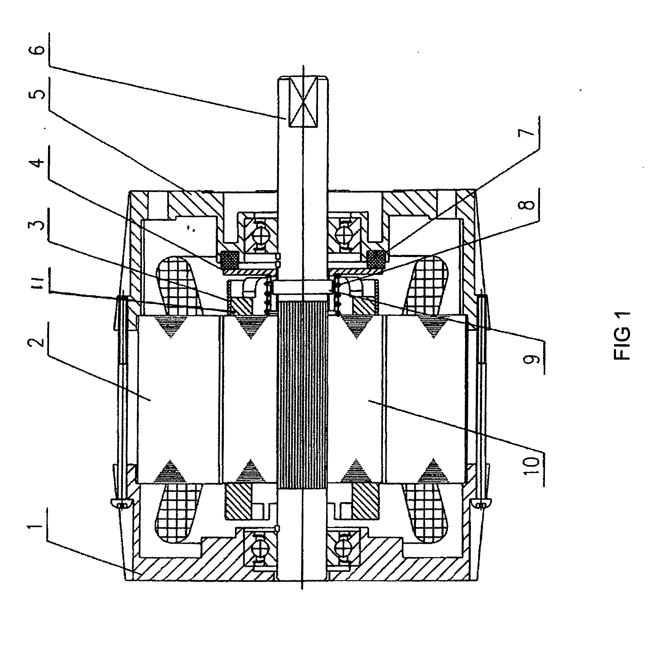

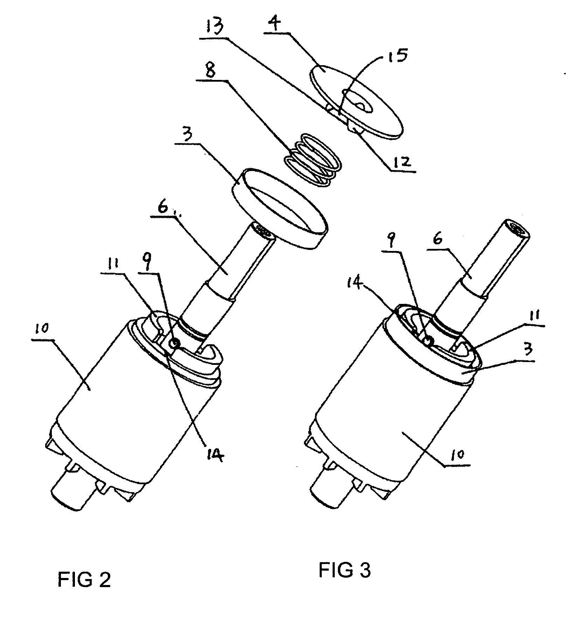

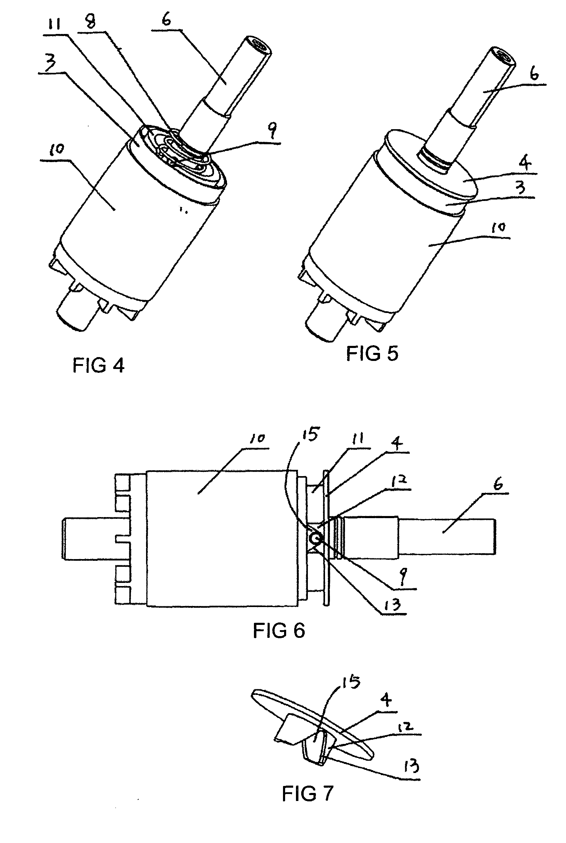

Figures 1-7 illustrate an embodiment of the electric motor of the invention with a rotor braking device comprising a stator 2, a rotor 10 and a shaft 6 fixed to the rotor 10. A short-circuit ring 11 is fixed to an end of the rotor 10 and the shaft 6 extends through the short-circuit ring 11.

A brake body 4 in the form of a circular plate rings the shaft 6 and is seated (when power is on) on the end of the short circuit ring 11. A friction body 7 is provided between the upperside of the brake body 4 and a front end cover 5 which is stable with respect to the stator 2. A spring 8 between the rotor 10 and the underside of the brake body 4 biases the brake body 4 against the friction body 7. A substantially cylindrical projection 12 on the underside of the brake body 4 extends coaxially within the short circuit ring 11. The projection 12 is provided with a recess 15 bounded by at least one beveled surface 13 which opens towards the short-circuit ring 11. A pin 9 is mounted radially on the shaft 6 and extends through the recess 15. The short-circuit ring 11 is provided with an opening 14 and the axis of the pin 9 lies in the opening 14. A magnetic conducting ring 3 is disposed between the rotor 10 and the brake body 4 surrounding the short-circuit ring 11 coaxially but is distant from the brake body 4.

When the electric motor is on, the magnetic conducting ring 3 exerts a force on the brake body 4 which overcomes the elastic force exerted by the spring 8. When the power to the electric motor is turned off, the brake body 4 is released and urged towards the friction body 7 by the spring 8 where its rotation is arrested and a braking force is exerted on the rotor 10. In the meantime, the rotating pin 9 is guided along the beveled surface 13 and causes the brake body 4 to move further into engagement with the friction body 7 to shorten the braking time.

## Claims

1. An electric motor comprising:
a stator [2];
a rotor [10];
a front end cover [5] which is stable with respect to the stator [2];
a short-circuit ring [11] fixed to an end of the rotor [10];
a shaft [6] fixed to the rotor [10] and extending through the short-circuit ring [11];
a brake body [4] ringing the shaft [6];
a friction body [7] between the brake body [4] and the front end cover [5];
a spring [8] between the rotor [10] and the brake body [4] with a tendency to bias the brake body [4] against the friction body [7],
**characterized in that** the electric motor further comprises:
an elongate projection [12] on the underside of the brake body [4], wherein the elongate projection [12] is provided with a recess [15] which is bounded by at least one beveled surface [13]; and
a pin [9] mounted radially on the shaft [6] and extending through the recess [15].

2. An electric motor as claimed in claim 1 further comprising
a magnetic conducting ring [3] between the rotor [10] and the brake body [4] which surrounds the short-circuit ring [11] coaxially but is separate from the brake body [4].

3. An electric motor as claimed in claim 1 or 2, wherein the short-circuit ring [3] is provided with at least one opening [14] and the axis of the pin [9] lies in the opening [14].

4. An electric motor as claimed in any preceding claim wherein the brake body [4] is a substantially planar member.

5. An electric motor as claimed in any preceding claim wherein the elongate projection is a substantially cylindrical projection [12].

6. A brake body as defined in any preceding claim.
